# EUROPÄISCHE PATENTSCHRIFT

(11) **EP 2 977 767 B1**
(45) Veröffentlichungstag und Bekanntmachung des Hinweises auf die Patenterteilung: **25.08.2021**
(21) Anmeldenummer: 14177778.9
(22) Anmeldetag: 21.07.2014
(51) Int. Cl.: G01N 35/10

(54) **Vorrichtung zur Positionsbestimmung einer automatisch verfahrbaren Lehre**
Device for determining the position of an automatically moveable gauge
Dispositif de détermination de position d'une jauge mobile automatique

(43) Veröffentlichungstag der Anmeldung: 27.01.2016
(73) Patentinhaber: Siemens Healthcare Diagnostics Products GmbH, 35041 Marburg (DE)
(72) Erfinder: Kotulla, Guenther, 65934 Frankfurt (DE); Brade, Carolin, 64859 Eppertshausen (DE); Bugner, Dirk, 55122 Mainz (DE)

(56) Entgegenhaltungen:
- DE-A1-102008 058 065
- US-A- 4 276 258
- US-A- 5 317 351
- US-A- 5 529 754
- US-A1- 2014 016 841
- None

## Beschreibung

Die Erfindung betrifft eine für ein Analysegerät geeignete Vorrichtung zur Positionsbestimmung einer Lehre und ein Verfahren zur Positionsbestimmung.

Zahlreiche Nachweis- und Analyseverfahren zur Bestimmung physiologischer Parameter in Körperflüssigkeitsproben oder anderen biologischen Proben werden heute automatisiert in großer Anzahl in automatischen Analysegeräten, auch so genannten in vitro-Diagnostiksystemen, durchgeführt.

Heutige Analysegeräte sind in der Lage, eine Vielzahl von Nachweisreaktionen und Analysen mit einer Probe durchzuführen. Um eine Vielzahl von Untersuchungen automatisiert durchführen zu können, sind diverse Vorrichtungen zum räumlichen Transfer von Messzellen, Reaktionsbehältern und Reagenzbehältern erforderlich, wie z.B. Transferarme mit Greiffunktion, Transportbänder oder drehbare Transporträder, sowie Vorrichtungen zum Transfer von Flüssigkeiten, wie z.B. Pipettiervorrichtungen. Die Geräte umfassen eine Steuereinheit, die mittels entsprechender Software dazu in der Lage ist, die Arbeitsschritte für die gewünschten Analysen weitgehend selbstständig zu planen und abzuarbeiten.

Viele der in derartigen automatisiert arbeitenden Analysegeräten verwendeten Analyseverfahren beruhen auf optischen Methoden. Diese Verfahren ermöglichen den qualitativen und quantitativen Nachweis von Analyten, d.h. der nachzuweisenden oder zu bestimmenden Substanzen in Proben. Die Bestimmung klinisch relevanter Parameter, wie zum Beispiel der Konzentration oder Aktivität eines Analyten, erfolgt vielfach, indem ein Teil einer Probe mit einem oder mehreren Testreagenzien in einem Reaktionsgefäß, welches auch die Messzelle sein kann, vermischt wird, wodurch z.B. eine biochemische Reaktion oder eine spezifische Bindungsreaktion in Gang gesetzt wird, die eine messbare Veränderung einer optischen oder anderen physikalischen Eigenschaft des Testansatzes bewirkt.

Proben können Analysegeräten in Probenentnahmeröhrchen zugeführt werden, die durch einen Verschluss, der mit einer Nadel durchstochen werden kann, verschlossen sind. Alternativ können die Probenentnahmeröhrchen auch offen sein bzw. vor Zuführung in das Analysegerät geöffnet werden. Teile der Probe oder die ganze Probe kann dem Probenentnahmeröhrchen im Analysegerät mit einer Nadel entnommen und in andere Behältnisse transferiert werden. Dabei ist eine genaue Ausrichtung der Nadel notwendig, da die Nadel die oft relativ kleine Öffnung bzw. den relativ kleinen Verschluss des Probenentnahmeröhrchens treffen muss und gleichzeitig den Rand des Probenentnahmeröhrchens nicht berühren soll, um beispielsweise ein Verbiegen der Nadel zu vermeiden. Ferner ist es notwendig, dass die Pipettiernadel relativ kleine Öffnungen von Küvetten, Waschstationen oder Niederhaltern präzise trifft. Probenröhrchen und Reaktionsgefäße können sich in Aufnahmepositionen auf einer linear bewegbaren oder drehbaren Baugruppe befinden.

Insbesondere können moderne Analysegeräte mit einer Vorrichtung zur Positionsbestimmung für Pipettiernadeln ausgestattet sein. Damit lassen sich Pipettiernadeln justieren und teilweise auch auf Verbiegungen, wie sie durch Abnutzung oder Kollisionen entstehen können, kontrollieren. Ferner lässt sich die korrekte Montage nach Auswechseln einer Pipettiernadel verifizieren, beispielsweise durch Bestimmung der Position der Pipettiernadelspitze. Gegebenenfalls kann auch eine Abweichung der Position der Pipettiernadelspitze von der Sollposition durch entsprechende Verfahrung der Pipettiernadel erreicht werden. Eine Pipettiernadel ist üblicherweise auf einem Transferarm montiert.

Interagierende Baugruppen, wie z.B. eine linear bewegbare Baugruppe oder eine drehbare Baugruppe mit Aufnahmepositionen für Probenröhrchen und ein beispielsweise linear bewegbarer Transferarm mit einer Pipettiernadel, einem Greifer oder einer Lehre müssen relativ zueinander präzise justiert werden. Die linear bewegbare Baugruppe und der linear bewegbare Transferarm oder die drehbare Baugruppe und der linear bewegbare Transferarm können dabei in unterschiedlichen Winkeln zueinander angeordnet sein. Beispielsweise kann in einem automatischen Analysesystem auch eine drehbare Baugruppe mit mehreren linear bewegbaren Transferarmen, die in unterschiedlichen Winkeln zu der drehbaren Baugruppe stehen, interagieren. Zur Justage werden üblicherweise mehrere Referenzanschlagspunkte mit bekannten Positionskoordinaten verwendet. Üblicherweise erfolgen die Justagen von interagierenden Baugruppen von Hand durch einen geschulten Servicetechniker, was oft einen erheblichen Aufwand bedeutet und mit hohen Kosten verbunden ist.

Es ist daher Aufgabe der Erfindung, eine Vorrichtung zur Positionsbestimmung für eine präzise automatische Justage von interagierenden Baugruppen in einem Analysegerät zur Verfügung zu stellen, wobei die Justage unabhängig von den Winkeln, unter denen die interagierenden Baugruppen zueinander angeordnet sind, erfolgen kann.

Die Aufgabe wird erfindungsgemäß durch die im Folgenden beschriebenen Verfahren und Gegenstände gelöst.

Es wurde gefunden, dass eine präzise automatische Justage von interagierenden Baugruppen mittels speziell geformter Aufnahmepositionen möglich ist, die aus beispielsweise Metall oder leitendem Kunststoff bestehen und die auf bewegbaren Baugruppen angeordnet sind und die beispielsweise mittels kapazitiver Methoden mit einer leitenden Lehre detektiert werden können.

Gegenstand der vorliegenden Erfindung ist eine Vorrichtung zur Positionsbestimmung einer automatisch verfahrbaren Lehre, die mindestens eine Lehre, eine Vorrichtung zum Verfahren der Lehre in der Raumrichtung X, die senkrecht zur Längsachse der Lehre steht, sowie eine Vorrichtung zum Verfahren der Lehre in einer Raumrichtung Z, die parallel zur Längsachse der Lehre verläuft, sowie einen Sensor zur Erkennung des Anschlags oder der Annäherung der Lehre an einen Gegenstand sowie eine zumindest teilweise umrandete Aufnahmeposition für die Lehre, in die die Lehre durch Verfahren der Lehre in Raumrichtung X und/oder Z zumindest teilweise einführbar ist, sowie eine bewegbare Baugruppe aufweist. Die Aufnahmeposition für die Lehre ist auf der bewegbaren Baugruppe angeordnet.

Dies hat den Vorteil, dass die bisher notwendige, aufwändige händige Positionsbestimmung, insbesondere nach dem Auswechseln von Lehren, entfallen kann. Dadurch ergeben sich auch erhebliche Kostenvorteile.

Ferner kann eine Abweichung von der Senkrechtstellung der Lehre ermittelt werden, indem die Position der Lehre in Raumrichtung X und/oder Y an verschiedenen Stellen entlang der Lehre ermittelt wird. Dabei ist die Lehre auch in Raumrichtung Z und/oder -Z entsprechend zu verfahren.

Die mindestens eine bewegbare Baugruppe kann linear oder drehbar bewegbar sein. Vorteilhafterweise kann die Baugruppe in positiver und/oder negativer Richtung bewegt werden.

In einer bevorzugten Ausführung ist die mindestens eine bewegbare Baugruppe drehbar ausgestaltet und kann bezüglich des Polarwinkels (Azimut) in mindestens einem Winkelbereich innerhalb von 0 und 360 Grad gedreht werden. In weiterer vorteilhafter Ausgestaltung ist die bewegbare Baugruppe drehbar ausgestaltet und kann bezüglich des Polarwinkels (Azimut) um wenigstens 360 Grad gedreht werden. In besonders bevorzugter Ausführung ist die drehbare Baugruppe rotierbar. Vorteilhafterweise kann die Drehung in positiver und/oder negativer Richtung erfolgen.

In einer bevorzugten Ausführung der erfindungsgemäßen Vorrichtung zur Positionsbestimmung weist die Aufnahmeposition für die Lehre einen ersten Randabschnitt und einen zweiten Randabschnitt auf, wobei die Randabschnitte die Aufnahmeposition für die Lehre in Raumrichtung X derart begrenzen, dass die Aufnahmeposition für die Lehre in Raumrichtung X, die tangential zur drehbaren Baugruppe im Bereich der Vorrichtung zur Positionsbestimmung verläuft, zwischen einer ersten gedachten Linie, die parallel zur Raumrichtung X verläuft und einer zweiten gedachten Linie, die parallel zur Raumrichtung X verläuft, streng monoton abnimmt. Dies hat den Vorteil, dass die Positionsbestimmung mittels vergleichsweise wenigen Verfahrensschritten schneller erfolgen kann und dass die bisher notwendige Verfahrung der Lehre in zwei Raumrichtungen X und Y zur Positionsbestimmung in den zwei Raumrichtungen X und Y, insbesondere nach dem Auswechseln einer Lehre, entfallen kann.

In weiterer bevorzugter Ausführung der erfindungsgemäßen Vorrichtung zur Positionsbestimmung weist die Aufnahmeposition für die Lehre die Form eines Dreiecks, bevorzugt die Form eines gleichschenkligen Dreiecks oder die Form eines Zweiecks in der Form ähnlich oder gleich einem gleichschenkligen Dreieck mit einem gerundeten Abschnitt zwischen den Schenkeln oder die Form einer halben Kreisscheibe oder die Form einer viertel Kreisscheibe auf.

Dreieckige Formen der Aufnahmeposition sind vorteilhaft, da sie besonders einfach und kostengünstig, z.B. mittels Spritzgusstechniken gefertigt werden können. Aufnahmepositionen mit gerundeten oder runden Abschnitten können besonders einfach mittels Fräßverfahren gefertigt werden.

Gleichschenklige Ausführungen des Dreiecks oder Ausgestaltungen der Aufnahmeposition als beispielsweise halbe oder viertel Kreisscheibe sind vorteilhaft, da eine vergleichsweise große Fläche von der Aufnahmeposition umfasst wird und somit auch nur vergleichsweise ungenau vorjustierte Lehren automatisch in die Aufnahmeposition verfahren und automatisch justiert werden können.

Vorteilhafterweise sind die Winkel des gleichschenkligen Dreiecks in Abhängigkeit vom Durchmesser der Lehre so gewählt, dass der Verfahrweg der Lehre in Raumrichtung X zwischen den Schenkeln des Dreiecks bis zum jeweiligen Anschlag der Lehre an den Schenkeln sich in Abhängigkeit der Position der Lehre in Raumrichtung Y so verhält, dass bei einer Veränderung der Position der Lehre in Raumrichtung Y um einen ersten Betrag, beispielsweise 1 mm, sich der Verfahrweg der Lehre in Raumrichtung X zwischen den Schenkeln des Dreiecks ebenfalls um den ersten Betrag verändert. Dabei können, je nach Wahl der Orientierung des Koordinatensystems, die Veränderung der Position der Lehre in Raumrichtung Y und die Veränderung des Verfahrwegs der Lehre in Raumrichtung X zwischen den Schenkeln des Dreiecks entweder das gleiche Vorzeichen oder jeweils das andere Vorzeichen aufweisen.

Durch den somit gegebenen, sehr einfachen Zusammenhang der Veränderung der Position der Lehre in Raumrichtung Y und der Veränderung des Verfahrwegs der Lehre in Raumrichtung X zwischen den Schenkeln des Dreiecks bedarf es keiner komplizierten und zeitaufwändigen Berechnung, um beispielsweise bei gegebenem Verfahrweg der Lehre in Raumrichtung X die Position der Lehre in Raumrichtung Y zu bestimmen.

In weiterer bevorzugter Ausführung der erfindungsgemäßen Vorrichtung zur Positionsbestimmung weist die Aufnahmeposition für die Lehre einen ersten Randabschnitt und einen zweiten Randabschnitt auf, wobei der erste Randabschnitt und der zweite Randabschnitt der Aufnahmeposition für die Lehre gerade verlaufen und in V-Form zusammen laufen und wobei der erste Randabschnitt und der zweite Randabschnitt symmetrisch sind zur gerade verlängerten Verbindungslinie des Drehpunktes der drehbaren Baugruppe und des Punktes, an dem der erste Randabschnitt und der zweite Randabschnitt zusammenlaufen. Die Aufnahmeposition ist dabei auf der drehbaren Baugruppe so orientiert, dass sich die Aufnahmeposition in radialer Richtung nach außen öffnet. Dies hat beispielsweise den Vorteil, dass eine Lehre ohne Bewegung in Raumrichtung Z, die parallel zur Drehachse der drehbaren Baugruppe und/oder der Längsachse der Lehre steht, in die Aufnahmeposition verfahren werden kann. Der Öffnungswinkel zwischen dem ersten Randabschnitt und dem zweiten Randabschnitt beträgt bevorzugt 20 bis 140 Grad, besonders bevorzugt 60 bis 100 Grad, ganz besonders bevorzugt 80 Grad.

In weiterer bevorzugter Ausführung der erfindungsgemäßen Vorrichtung zur Positionsbestimmung ist die Aufnahmeposition für die Lehre als Vertiefung in Form eines Zylinders, bevorzugt eines geraden Kreiszylinders ausgestaltet. Dies hat den Vorteil, dass die Aufnahmeposition besonders einfach und kostengünstig gefertigt werden kann. In weiterer bevorzugter Ausführung weist die Vertiefung mindestens eine weitere Vertiefung auf, die sich vorzugsweise im Zentrum und/oder am Rand der Vertiefung befindet.

In weiterer bevorzugter Ausführung der erfindungsgemäßen Vorrichtung zur Positionsbestimmung weist die Aufnahmeposition für die Lehre mindestens eine Stufe, bevorzugt mindestens zwei Stufen mit einer Begrenzungsfläche in Raumrichtung Z auf, deren Normale parallel zur Raumrichtung Z verläuft. Dies hat den Vorteil, dass eine Positionsbestimmung der Lehre auch in Raumrichtung Z erfolgen kann. Neben der Position der Begrenzungsfläche oder den Positionen der Begrenzungsflächen in Raumrichtung Z kann auch beispielsweise die Höhe der Stufe oder der Stufen in Justageverfahren ausgewertet werden. Dies ermöglicht eine besonders genaue, robuste und vergleichsweise wenig fehleranfällige Bestimmung der Position in Raumrichtung Z.

In weiterer bevorzugter Ausführung der erfindungsgemäßen Vorrichtung zur Positionsbestimmung weist die Aufnahmeposition für die Lehre mindestens eine Begrenzungsfläche auf, deren Normale senkrecht zur Raumrichtung Z und beispielsweise parallel zur Raumrichtung Y verläuft, wobei die Raumrichtung Y senkrecht zur Bewegungsrichtung der bewegbaren Baugruppe, bzw. in radialer Richtung bei einer drehbaren Baugruppe verläuft. In bevorzugter Ausführung befindet sich die Begrenzungsfläche zwischen zwei der Begrenzungsflächen in Raumrichtung Z, die eine Stufe bilden.

In bevorzugter Ausführung ist die Lehre als Zylinder, besonders bevorzugt als gerader Kreiszylinder ausgestaltet, oder die Lehre ist ein Greifer, oder die Lehre ist eine Pipettiernadel. Beispielsweise kann eine Vorrichtung zur Positionsbestimmung auch zwei oder mehr Lehren umfassen. Beispielsweise können die zwei oder mehr Lehren mindestens einen Greifer und/oder eine Pipettiernadel umfassen.

Ein anderer Gegenstand der Erfindung ist ein Analysegerät mit bewegbaren Baugruppen umfassend eine erfindungsgemäße Vorrichtung zur Positionsbestimmung einer automatisch verfahrbaren Lehre.

Ein erfindungsgemäßes Analysegerät umfasst vorteilhafterweise Vorrichtungen zum räumlichen Transfer von Messzellen, Reaktionsbehältern und Reagenzbehältern, wie z.B. Transferarme mit Greiffunktion, Transportbänder oder drehbare Transporträder, sowie zum Transfer von Flüssigkeiten, wie z.B. Pipettiervorrichtungen mit Pipettiernadeln. Ein erfindungsgemäßes Analysegerät umfasst vorteilhafterweise ferner eine Steuereinheit, die mittels entsprechender Software dazu in der Lage ist, die Arbeitsschritte für die gewünschten Analysen weitgehend selbstständig zu planen und abzuarbeiten.

Ein weiterer Gegenstand der vorliegenden Erfindung ist ein Verfahren zur Positionsbestimmung einer automatisch verfahrbaren Lehre umfassend die folgenden Verfahrensschritte:
a) Einführen der Lehre in eine Aufnahmeposition, die auf einer bewegbaren Baugruppe angeordnet ist, durch Verfahren der Lehre in Raumrichtung Z, die parallel zur Längsachse der Lehre verläuft und/oder in Raumrichtung X, die parallel zur Bewegungsrichtung der bewegbaren Baugruppe verläuft und/oder in Raumrichtung Y, die senkrecht zur Bewegungsrichtung der bewegbaren Baugruppe verläuft;
b) Bewegen der bewegbaren Baugruppe in positiver Richtung bis zur Annäherung oder zum Anschlag der Lehre an einen ersten Randabschnitt der Aufnahmeposition;
c) Bewegen der bewegbaren Baugruppe in negativer Richtung bis zur Annäherung oder zum Anschlag der Lehre an einen zweiten Randabschnitt der Aufnahmeposition; und
d) Ermitteln des Abstands zwischen dem ersten Randabschnitt und dem zweiten Randabschnitt der Aufnahmeposition.

In weiterer bevorzugter Ausführung umfasst ein erfindungsgemäßes Verfahren zur Positionsbestimmung einer automatisch verfahrbaren Lehre zusätzlich die folgenden Schritte:
e) Ermitteln der Position der Lehre in Raumrichtung X durch Auswertung des Anschlagspunkts am ersten Randabschnitt und/oder des Anschlagspunkts am zweiten Randabschnitt der Aufnahmeposition;
f) Ermitteln der Position der Lehre in Raumrichtung Y durch Zuordnung des ermittelten Abstands zwischen dem Anschlagspunkt am ersten Randabschnitt und dem Anschlagspunkt am zweiten Randabschnitt der Aufnahmeposition einer Position in Raumrichtung Y.

Durch das Bewegen der bewegbaren Baugruppe in positiver Richtung bis zur Annäherung oder bis zum Anschlag der Lehre an den ersten Randabschnitt der Aufnahmeposition wird eine erste Position X1 der Lehre in Raumrichtung X ermittelt. Durch Bewegen der bewegbaren Baugruppe in Raumrichtung minus X (-X) bis zur Annäherung oder bis zum Anschlag der Lehre an den zweiten Randabschnitt der Aufnahmeposition wird eine zweite Position X2 der Lehre in Raumrichtung X ermittelt. Die Ausdehnung der Aufnahmeposition in Raumrichtung X ergibt sich aus dem Abstand von X1 und X2. Mittels der so ermittelten Ausdehnung der Aufnahmeposition in Raumrichtung X lässt sich aufgrund der bekannten Form und Orientierung der Aufnahmeposition auf der bewegbaren Baugruppe auf die genaue Position der Lehre in Raumrichtung Y schließen. Die genaue Position der Lehre in Raumrichtung X ergibt sich durch Auswertung der Position X1 und/oder der Position X2. Nach Abschluss der Positionsbestimmung kann die Lehre beispielsweise wieder aus der Aufnahmeposition heraus gefahren werden durch Verfahrung der Lehre in den Raumrichtungen X, Y und/oder Z.

Bei der Ermittlung und Auswertung des Abstands zwischen Position X1 und Position X2 ist vorteilhafterweise die Ausdehnung des Querschnitts der Lehre in den Raumrichtungen X und Y und gegebenenfalls die Form des Querschnitts der Lehre zu beachten. Die Ausdehnung der Lehre kann gegebenenfalls vernachlässigt werden, z.B. bei einer sehr dünnen Nadel oder wenn die akzeptable Toleranz bei der Positionsbestimmung relativ zur Ausdehnung des Querschnitts der Lehre groß ist.

In weiterer bevorzugter Ausführung umfasst ein erfindungsgemäßes Verfahren zur Positionsbestimmung einer automatisch verfahrbaren Lehre zusätzlich die folgenden Schritte:
g) Verfahren der Lehre in Raumrichtung Y innerhalb der Aufnahmeposition;
h) Wiederholen der Schritte b), c), d);
i) Ermitteln der Position der Lehre in Raumrichtung Y durch Zuordnen der ermittelten Abstände zwischen den Anschlagspunkten am ersten Randabschnitt und den Anschlagspunkten am zweiten Randabschnitt der Aufnahmeposition zu einer Position in Raumrichtung Y.

Dies hat den Vorteil, dass eine Positionsbestimmung auch mittels einer Aufnahmeposition für die Lehre erfolgen kann, die beispielsweise die Form eines geraden Kreiszylinders aufweist. Insbesondere muss die Aufnahmeposition für die Lehre dieser bevorzugten Ausführung des erfindungsgemäßen Verfahrens zur Positionsbestimmung nicht notwendigerweise einen ersten Randabschnitt und einen zweiten Randabschnitt aufweisen, wobei die Randabschnitte die Aufnahmeposition für die Lehre in Raumrichtung X derart begrenzen, dass die Aufnahmeposition für die Lehre in Raumrichtung X, die tangential zur drehbaren Baugruppe im Bereich der Vorrichtung zur Positionsbestimmung verläuft, zwischen einer ersten gedachten Linie, die parallel zur Raumrichtung X verläuft und einer zweiten gedachten Linie, die parallel zur Raumrichtung X verläuft, streng monoton abnimmt.

In weiterer bevorzugter Ausführung umfasst das erfindungsgemäße Verfahren zusätzlich die folgenden Schritte:
j) Verfahren der Lehre in Raumrichtung Y innerhalb der Aufnahmeposition bis zur Annäherung oder zum Anschlag der Lehre an eine Begrenzungsfläche der Aufnahmeposition, deren Normale parallel zur Raumrichtung Y verläuft, und
k) Ermitteln der Position der Lehre in Raumrichtung Y durch Auswertung des Anschlagspunkts der Lehre an der Begrenzungsfläche der Aufnahmeposition, deren Normale parallel zur Raumrichtung Y verläuft.

Dies hat den Vorteil, dass eine Positionsbestimmung oder ungefähre Positionsbestimmung der Lehre in Raumrichtung Y, die senkrecht zur Bewegungsrichtung der bewegbaren Baugruppe, bzw. in radialer Richtung bei einer drehbaren Baugruppe verläuft, vergleichsweise schnell, unkompliziert und beispielsweise auch unabhängig von anderen Verfahrensschritten erfolgen kann. Somit kann ein Vergleich der auf unterschiedliche Weise, unabhängig voneinander bestimmten Positionen der Lehre in Raumrichtung Y erfolgen. Dies erhöht beispielsweise auch die Verlässlichkeit und Robustheit eines erfindungsgemäßen Verfahrens zur Positionsbestimmung.

In weiterer bevorzugter Ausführung des erfindungsgemäßen Verfahrens ist die bewegbare Baugruppe drehbar ausgestaltet, wobei die Raumrichtung X tangential zur drehbaren Baugruppe verläuft und wobei die Raumrichtung Y radial zur drehbaren Baugruppe verläuft.

In weiterer bevorzugter Ausführung des erfindungsgemäßen Verfahrens weist die Aufnahmeposition für die Lehre die Form eines Dreiecks, bevorzugt die Form eines gleichschenkligen Dreiecks oder die Form eines Zweiecks in der Form ähnlich oder gleich einem gleichschenkligen Dreiecks mit einem gerundeten Abschnitt zwischen den Schenkeln oder die Form einer halben Kreisscheibe oder die Form einer viertel Kreisscheibe auf.

In weiterer bevorzugter Ausführung des erfindungsgemäßen Verfahrens verlaufen der erste Randabschnitt und der zweite Randabschnitt der Aufnahmeposition für die Lehre gerade und in V-Form zusammen, wobei der erste Randabschnitt und der zweite Randabschnitt symmetrisch sind zur gerade verlängerten Verbindungslinie des Drehpunktes der drehbaren Baugruppe und des Punktes, an dem der erste Randabschnitt und der zweite Randabschnitt zusammenlaufen.

Die Zielposition einer Justage mittels eines erfindungsgemäßen Verfahrens zur Positionsbestimmung zeichnet sich beispielsweise durch die Winkelhalbierende der V-Struktur sowie durch die erwartete Kantenlänge aus. Die Zielposition wird beispielsweise durch kombinierte Linearbewegung der Lehre sowie Rotationsbewegung der drehbaren Baugruppe ermittelt.

In weiterer bevorzugter Ausführung des erfindungsgemäßen Verfahrens ist die Aufnahmeposition für die Lehre als Vertiefung in Form eines Zylinders, bevorzugt eines geraden Kreiszylinders ausgestaltet.

In weiterer bevorzugter Ausführung des erfindungsgemäßen Verfahrens weist die Aufnahmeposition für die Lehre mindestens eine Stufe, bevorzugt mindestens zwei Stufen mit einer Begrenzungsfläche in Raumrichtung Z auf.

In weiterer bevorzugter Ausführung des erfindungsgemäßen Verfahrens weist die Aufnahmeposition für die Lehre mindestens eine Begrenzungsfläche zwischen zwei der Begrenzungsflächen in Raumrichtung Z auf, deren Normale senkrecht zur Raumrichtung Z und beispielsweise parallel zur Raumrichtung Y verläuft, wobei die Raumrichtung Y senkrecht zur Bewegungsrichtung der bewegbaren Baugruppe bzw. in radialer Richtung bei einer drehbaren Baugruppe verläuft.

In weiterer bevorzugter Ausführung des erfindungsgemäßen Verfahrens ist die Lehre als Zylinder, bevorzugt als gerader Kreiszylinder ausgestaltet, oder die Lehre ist ein Greifer oder eine Pipettiernadel.

Die Annäherung oder der Anschlag der Lehre an den Rand der Aufnahmeposition wird mittels eines geeigneten Sensors detektiert.

In bevorzugter Ausgestaltung wird die Annäherung oder der Anschlag der Lehre an den Rand der Aufnahmeposition mittels kapazitiver Messmethoden ermittelt. Dies ist insbesondere dann möglich, wenn die Lehre und der Rand der Aufnahmeposition aus einem elektrisch leitfähigen Material bestehen. Vorteilhafterweise kann hierzu z.B. auch eine bereits vorhandene Funktionalität zur kapazitiven Leveldetektion von Flüssigkeiten mittels einer leitenden Pipettiernadel benutzt werden.

In alternativen Ausgestaltungen besteht dabei jeweils nur mindestens ein Randabschnitt der Aufnahmeposition und/oder mindestens ein Teil der Lehre aus einem elektrisch leitfähigen Material.

Das Verfahren ist anwendbar, wenn die ungefähre Position der Pipettiernadel relativ zur Position der bewegbaren Baugruppe insoweit hinreichend genau vorab bekannt ist, dass die Lehre in die Aufnahmeposition verfahren werden kann. Durch geeignete Wahl der Ausdehnung und/oder des Öffnungswinkels der Aufnahmeposition kann diese Bedingung erfüllt werden.

Vorteilhafterweise werden die erfindungsmäßigen Gegenstände und Verfahren zur Justage einer Pipettiernadel, bevorzugt der Spitze einer Pipettiernadel, relativ zu einer drehbaren Baugruppe mit Aufnahmepositionen für Probenröhrchen verwendet. Vorteilhafterweise sind die Aufnahmepositionen für Probenröhrchen zur Aufnahme von jeweils einem Probenröhrchen mit runden, ovalen und/oder polygonen Querschnitten geeignet. Vorteilhafterweise umfasst die drehbare Baugruppe eine oder mindestens zwei Aufnahmepositionen für Probenröhrchen.

In bevorzugter Ausgestaltung der bewegbaren Baugruppe sind die mindestens zwei Aufnahmepositionen für Probenröhrchen in einer Kreisbahn, bevorzugt in mindestens zwei konzentrischen Kreisbahnen angeordnet. Dies hat beispielsweise den Vorteil, dass pro Flächeneinheit eine größere Anzahl von Aufnahmepositionen angeordnet werden können. Ferner kann hierdurch der Probendurchsatz erhöht werden.

Bei einem Probenröhrchen kann es sich z.B. um eine Messzelle oder eine Küvette handeln, die häufig aus Glas, Kunststoff oder Quarzglas besteht. Auch Durchflussküvetten können in einer erfindungsgemäßen Ausgestaltung der bewegbaren Baugruppe als Probenröhrchen eingesetzt werden.

Unter einer Pipettiernadel ist im Sinne der vorliegenden Erfindung eine Nadel, z.B. aus Metall oder elektrisch leitendem Kunststoff, zum Pipettieren von Flüssigproben und/oder von Flüssigreagenzien in einem Analysegerät zu verstehen. In bevorzugten Ausgestaltungen ist der Querschnitt der Pipettiernadel rund oder annähernd rund oder oval oder annähernd oval.

Die Begriffe "Nadel" und "Pipettiernadel" werden synonym verwendet.

Unter einer "Probe" ist im Sinne der Erfindung das Material zu verstehen, dass die nachzuweisende Substanz (den Analyten), vermutlich enthält. Der Begriff Probe umfasst insbesondere biologische Flüssigkeiten von Menschen oder Tieren, wie z.B. Blut, Plasma, Serum, Sputum, Exsudat, bronchoalveoläre Lavage, Lymphflüssigkeit, Synovialflüssigkeit, Samenflüssigkeit, Vaginalschleim, Feces, Urin, Liquor, aber auch z.B. durch Homogenisation oder Zelllyse aufgearbeitete Gewebe- oder Zellkulturproben. Ferner können auch z.B. pflanzliche Flüssigkeiten oder Gewebe, forensische Proben, Wasser- und Abwasserproben, Nahrungsmittel, Arzneimittel als Probe dienen, die ggf. vor der Bestimmung einer entsprechenden Probenvorbehandlung zu unterziehen sind.

Bei Angaben bezüglich der Raumrichtungen X, Y, Z ist stets neben der genauen Raumrichtung auch die Raumrichtung gemeint, die um bis zu 20 Grad, bevorzugt um bis zu 10 Grad, sehr bevorzugt um bis zu 5 Grad zur genauen Raumrichtung geneigt ist.

Die erfindungsgemäßen Gegenstände und Verfahren der vorliegenden Patentanmeldung werden außerdem in den Patentansprüchen beschrieben.

Die in den Figuren beispielhaft dargestellten Ausführungsformen sollen die vorliegende Erfindung veranschaulichen und sind nicht als Einschränkung zu verstehen. Darin enthält:
- FIG. 1: eine Vorrichtung (10) zur Positionsbestimmung für eine Lehre (26),
- FIG. 2-9: Aufnahmepositionen für eine Lehre (26),
- FIG 10-12: eine Vorrichtung (10) zur Positionsbestimmung mit einer Aufnahmepositionen (14) für eine Lehre (26) zur Justage einer Pipettiernadel (11) relativ zu einer drehbaren Baugruppe (27) in einem Analysegerät,
- FIG 13-14: eine alternative Ausführungsform der Vorrichtung (10) zur Positionsbestimmung mit einer Aufnahmepositionen (14),
- FIG 15: Illustration eines Ablaufs des Verfahrens zur Positionsbestimmung, und
- FIG. 16-19: Illustration eines Ablaufs des Verfahrens zur Positionsbestimmung.

Gleiche Teile sind in allen Figuren mit denselben Bezugszeichen versehen.

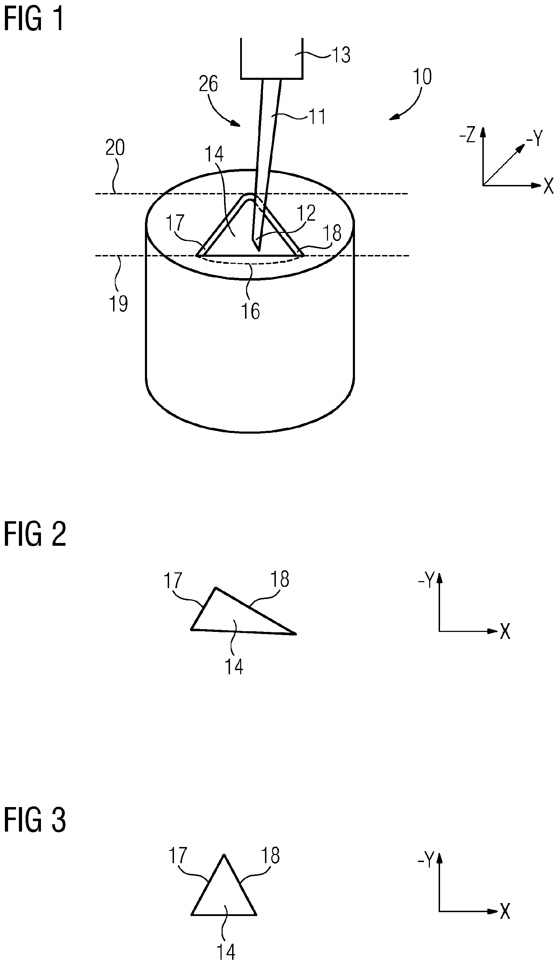

FIG. 1 illustriert beispielhaft eine erfindungsgemäße Vorrichtung (10) zur Positionsbestimmung für eine Lehre (26), wobei die Lehre (26) eine an einer Aufhängung (13) befestigte Pipettiernadel (11) mit einer Pipettiernadelspitze (12) ist. Die Vorrichtung (10) zur Positionsbestimmung ist eingebettet in ein nicht näher dargestelltes Analysegerät, welches zur Ausführung einer Vielzahl von Analysen von Proben ausgestaltet ist. Dazu umfasst das automatische Analysegerät eine Vielzahl von nicht gezeigten Transporteinrichtungen sowie weiterhin eine Steuereinheit zum automatisierten Auswerten der Analysen.

Die Vorrichtung (10) zur Positionsbestimmung für eine Lehre (26) umfasst eine Aussparung, die die Aufnahmeposition (14) für die Pipettiernadel (11) darstellt. Die Aufnahmeposition (14) weist einen Rand (16) auf und eine speziell ausgestaltete Form. Der Rand (16) verläuft teilweise parallel zu den gedachten Linien (19, 20) und weist einen ersten Randabschnitt (17) und einen zweiten Randabschnitt (18) auf. Die Pipettiernadel (11) ist dabei wenigstens in den Raumrichtungen X und Z mittels der Aufhängung (13) der Pipettiernadel verfahrbar. Die Aufnahmeposition (14) ist auf einer bewegbaren Baugruppe (27) angeordnet (nicht gezeigt).

FIG. 2-9 illustrieren beispielhaft verschiedene Ausführungsformen der Form des Randes (16) der Aufnahmeposition (14) für die Lehre (26) sowie bevorzugte Orientierungen der Aufnahmeposition (14). Die Blickrichtung ist entlang Raumrichtung Z.

FIG. 2 zeigt eine Aufnahmeposition (14), die die Form eines Dreiecks aufweist.

FIG. 3 zeigt eine Aufnahmeposition (14), die die Form eines gleichschenkligen Dreiecks aufweist.

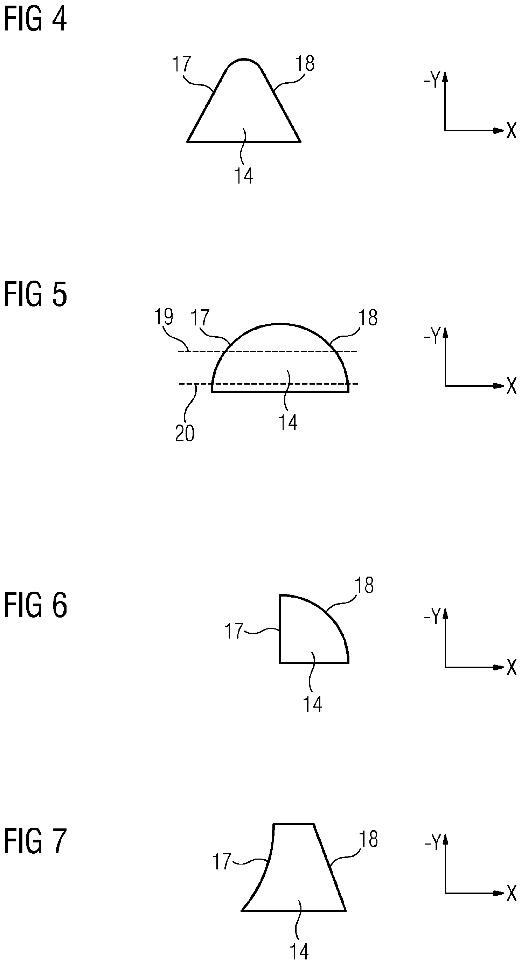

FIG. 4 zeigt eine Aufnahmeposition (14), die die Form eines Zweiecks in der Form ähnlich einem gleichschenkligen Dreieck jedoch mit einem gerundeten Abschnitt zwischen den Schenkeln aufweist.

FIG. 5 zeigt eine Aufnahmeposition (14), die die Form einer halben Kreisscheibe aufweist. Zusätzlich sind die gedachten Linien (19, 20) dargestellt.

FIG. 6 zeigt eine Aufnahmeposition (14), die die Form einer viertel Kreisscheibe aufweist.

FIG. 7 zeigt eine Aufnahmeposition (14), wobei der erste Randabschnitt (17) konvex gebogen verläuft und der zweite Randabschnitt (18) gerade verläuft.

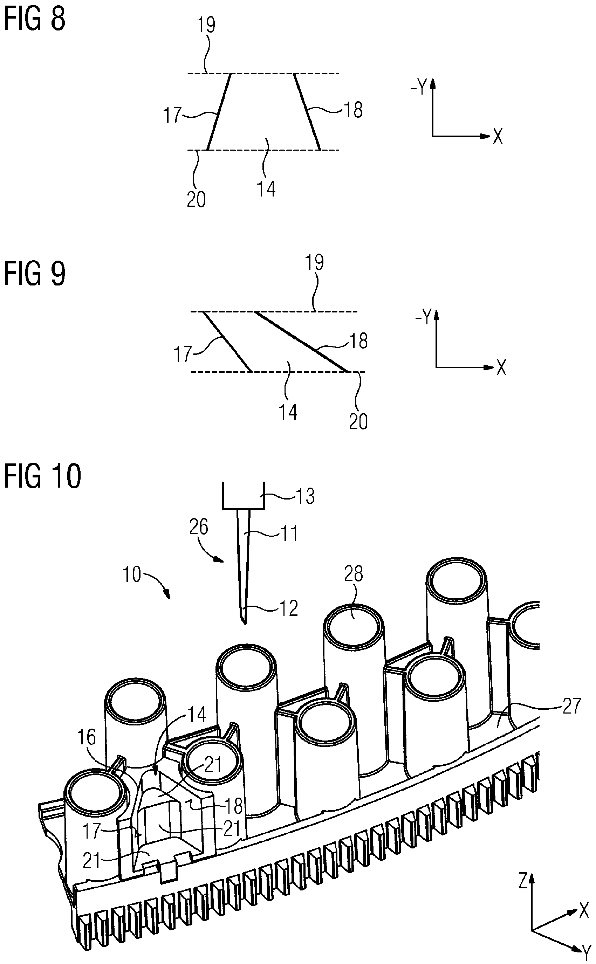

FIG. 8 und FIG. 9 zeigen Aufnahmepositionen (14), die durch einen gerade verlaufenden ersten Randabschnitt (17) und einen gerade verlaufenden zweiten Randabschnitt (18), die zueinander charakteristisch geneigt sind sowie durch die gedachten Linien (19, 20) begrenzt sind.

FIG. 10 illustriert beispielhaft eine bevorzugte Ausführungsform der erfindungsgemäßen Vorrichtung (10) zur Positionsbestimmung für eine Lehre (26) und eine drehbare Baugruppe (27), wobei die Lehre (26) eine an einer Aufhängung (13) befestigte Pipettiernadel (11) mit einer Pipettiernadelspitze (12) ist. Die Vorrichtung (10) zur

Positionsbestimmung ist eingebettet in ein nicht näher dargestelltes Analysegerät, welches zur Ausführung einer Vielzahl von Analysen von Proben ausgestaltet ist.

Die Vorrichtung (10) zur Positionsbestimmung für eine Lehre (26) umfasst eine Aussparung, die die Aufnahmeposition (14) darstellt. Die Aufnahmeposition (14) weist einen Rand (16) auf mit einem ersten (17) und einem zweiten Randabschnitt (18) und eine speziell ausgestaltete Form mit zwei Begrenzungsflächen (21) mit definierten Positionen in Raumrichtung Z. Die Begrenzungsflächen (21) legen durch ihren Abstand in Raumrichtung Z eine Stufe fest, die eine Begrenzungsfläche (21) mit einer Normalen in Raumrichtung Y umfasst.

Die Aufnahmeposition (14) ist auf der drehbaren Baugruppe so orientiert, dass sich die dreiecksähnliche Form der Aufnahmeposition (14) radial nach außen öffnet. Auf der Baugruppe befinden sich Aufnahmepositionen (28) zur Aufnahme von Probenröhrchen.

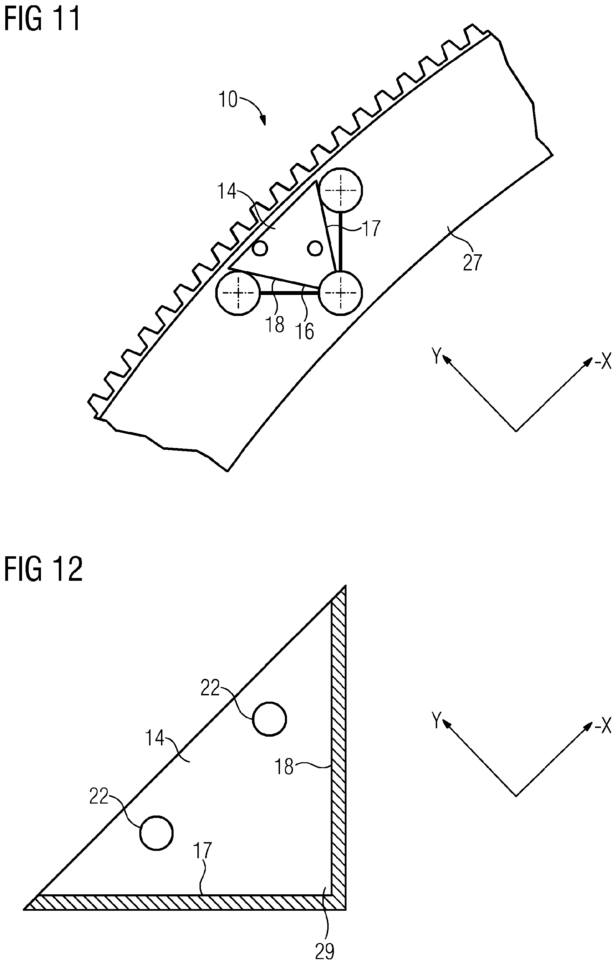

FIG. 11 illustriert beispielhaft eine bevorzugte Ausführungsform der Form des Randes (16) mit einem ersten (17) und einem zweiten Randabschnitt (18) der Aufnahmeposition (14). Die Blickrichtung ist entlang Raumrichtung Z. Die Aufnahmeposition (14) ist auf der bewegbaren Baugruppe (27), die als drehbare Baugruppe ausgestaltet ist, so orientiert, dass sich die dreiecksähnliche Form der Aufnahmeposition (14) radial nach außen öffnet.

FIG. 12 illustriert beispielhaft eine bevorzugte Ausführungsform einer Aufnahmeposition (14) mit einem ersten (17) und einem zweiten Randabschnitt. Die Blickrichtung ist entlang Raumrichtung Z. Die Aufnahmeposition (14) weist Verbindungsmittel (22) auf zur lösbaren Verbindung der Aufnahmeposition (14) mit einer bewegbaren Baugruppe (27.

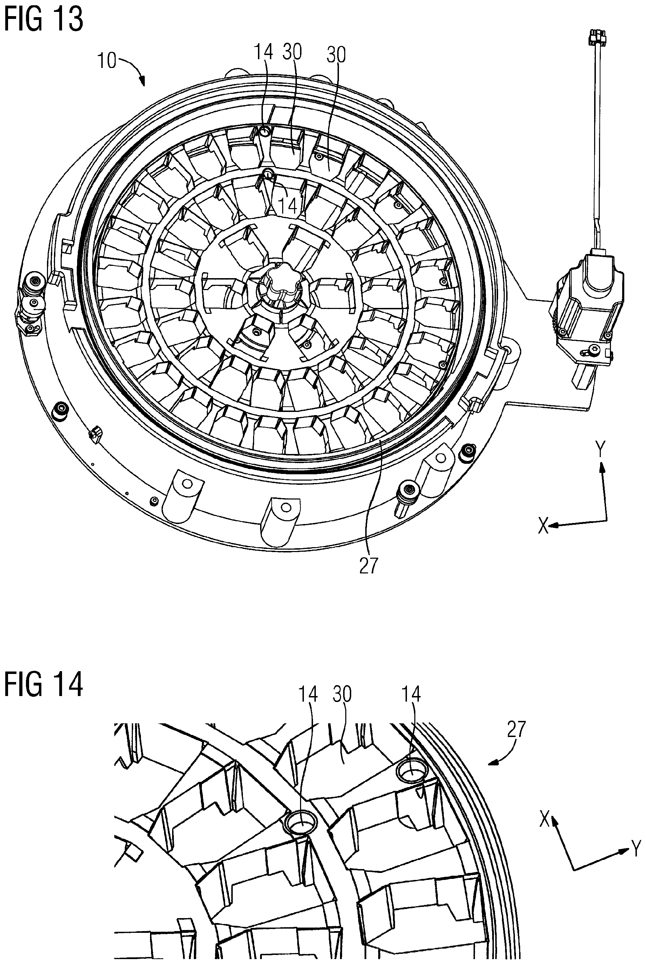

FIG. 13 und 14 illustrieren beispielhaft eine bevorzugte alternative Ausführungsform der Vorrichtung (10) zur Positionsbestimmung mit Aufnahmepositionen (14) für eine Lehre (26), bei der die Aufnahmepositionen (14) die Form eines Zylinders aufweisen. In FIG. 13 ist die Blickrichtung in etwa entlang der Raumrichtung Z, in FIG. 14 geneigt zur Raumrichtung Z. Die Aufnahmepositionen (14) sind auf einer drehbaren Baugruppe (27) bei unterschiedlichen Radien angebracht. Die drehbare Baugruppe (27) weist Aufnahmepositionen (30) für Reagenzbehälter auf, die konzentrisch in mehreren Ringen auf der bewegbaren Baugruppe (27) angeordnet sind.

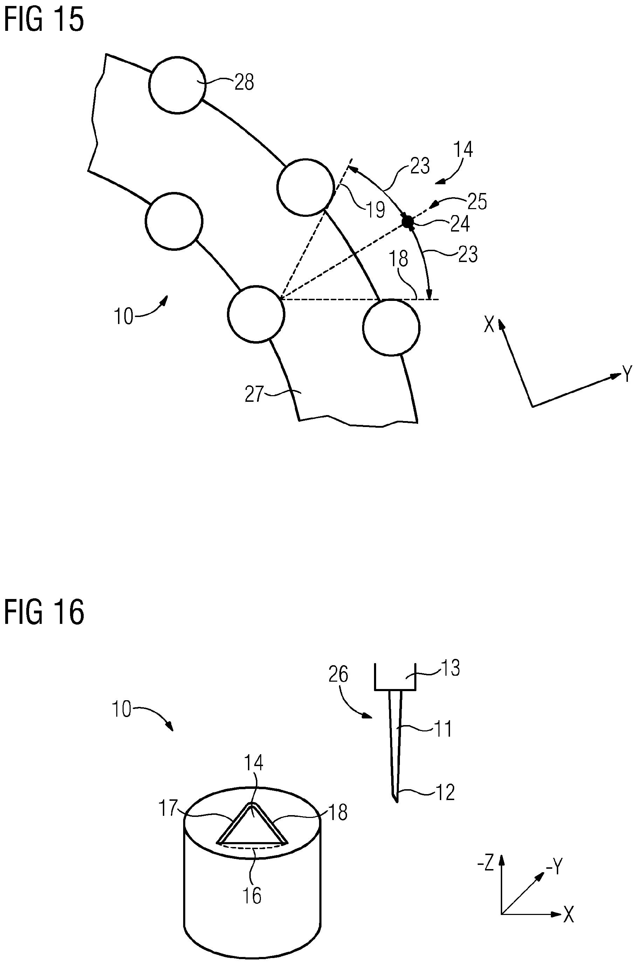

FIG. 15 illustriert beispielhaft eine bevorzugte Ausführungsform der erfindungsgemäßen Vorrichtung (10) zur Positionsbestimmung einer Lehre (26). Die Aufnahmeposition (14) für die Lehre (26) ist auf einer drehbaren Baugruppe (27) angeordnet. Die Blickrichtung ist entlang der Raumrichtung Z. Die Zielposition (24) der Lehre (26) liegt auf der Winkelhalbierenden (25) des durch den Rand der Aufnahmeposition (14) aufgespannten Winkels und an einer definierten radialen Position, die mittels definierter Abstände (23) zwischen dem ersten (17) und zweiten Randabschnitt (18) der Aufnahmeposition (14) festgelegt ist. Auf der bewegbaren Baugruppe (27) befinden sich Aufnahmepositionen (28) für Probenröhrchen, die in zwei konzentrischen Ringen angeordnet sind.

FIG. 16-19 illustrieren beispielhaft verschiedene Schritte einer bevorzugten Ausführungsform des erfindungsgemäßen Verfahrens zur Positionsbestimmung einer Lehre (26). Die Schritte können teilweise auch in alternativen Reihenfolgen durchgeführt werden.

Dabei zeigt FIG. 16 eine Vorrichtung (10) zur Positionsbestimmung mit einer Pipettiernadel (11) mit einer Pipettiernadelspitze (12) und einer Aufhängung (13) sowie einer Aufnahmeposition (14) mit einem ersten Randabschnitt (17) und einem zweiten Randabschnitt (18). Die Aufnahmeposition (14) ist in eine bewegbare Baugruppe (27) integriert. Die Pipettiernadel (11) befindet sich außerhalb der Aufnahmeposition (14).

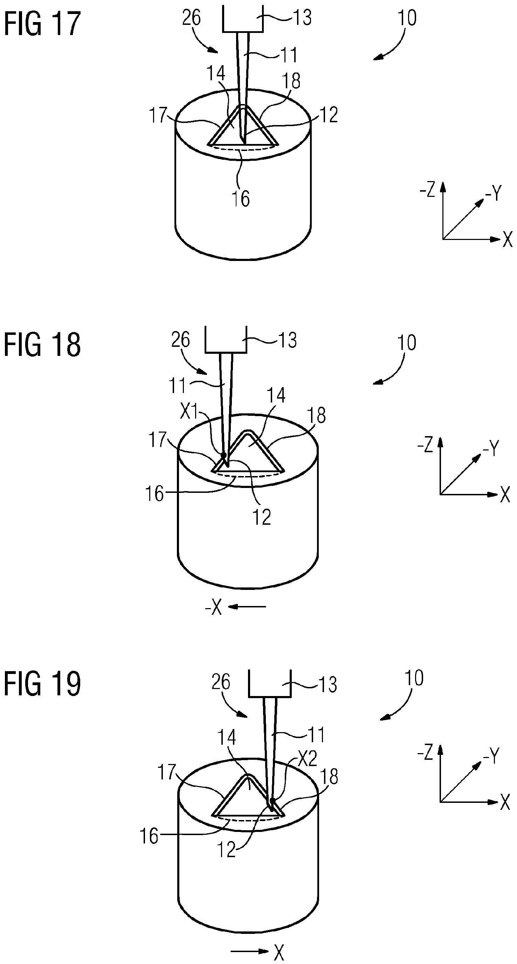

FIG. 17 zeigt die in FIG. 16 dargestellte Vorrichtung (10), wobei sich die Pipettiernadel (11) in der Aufnahmeposition (14) befindet. Dies kann durch Verfahren der Pipettiernadel (11) in Raumrichtung X und/oder Y und Z erreicht werden und/oder durch Bewegen der bewegbaren Baugruppe.

FIG. 18 zeigt die in FIG. 16 dargestellte Vorrichtung (10). Mittels Bewegung der bewegbaren Baugruppe (27) in Raumrichtung minus X (-X) wird ein erster Punkt X1 durch Annäherung und/oder Anschlag der Pipettiernadel (11) an den ersten Randabschnitt (17) bestimmt.

FIG. 19 zeigt die in FIG. 16 dargestellte Vorrichtung (10). Mittels Bewegung der bewegbaren Baugruppe (27) in Raumrichtung X wird ein zweiter Punkt X2 durch Annäherung und/oder Anschlag der Pipettiernadel (11) an den zweiten Randabschnitt (18) bestimmt. Eine genaue Bestimmung der Position der Pipettiernadel (11) in Raumrichtung X kann durch Auswertung von X1 und X2 erfolgen. Der Abstand der Punkte X2 und X1 wird ermittelt und ermöglicht die Bestimmung der Position der Pipettiernadel (11) in Raumrichtung Y durch Zuordnung des Abstandes X1 und X2 zu einer Position in Raumrichtung Y in Abhängigkeit der Form und Größe der Aufnahmeposition (14).

Die beschriebenen Bewegungen der bewegbaren Baugruppe (27) können beispielsweise durch Drehung einer drehbar ausgestalteten bewegbaren Baugruppe (27) erfolgen.

### BEZUGSZEICHENLISTE

- 10: Vorrichtung zur Positionsbestimmung
- 11: Pipettiernadel
- 12: Pipettiernadelspitze
- 13: Aufhängung
- 14: Aufnahmeposition
- 16: Rand
- 17: Erster Randabschnitt
- 18: Zweiter Randabschnitt
- 19: Erste gedachte Linie
- 20: Zweite gedachte Linie
- 21: Begrenzungsfläche
- 22: Verbindungsmittel
- 23: Abstand
- 24: Zielposition
- 25: Winkelhalbierende
- 26: Lehre
- 27: Bewegbare Baugruppe
- 28: Aufnahmeposition für Probenröhrchen
- 29: Punkt
- 30: Aufnahmeposition für Reagenzbehälter
- X: Raumrichtung X
- Y: Raumrichtung Y
- Z: Raumrichtung Z

## Patentansprüche

1. Vorrichtung (10) zur Positionsbestimmung einer automatisch verfahrbaren Lehre (26), besagte Vorrichtung aufweisend
a) die Lehre (26),
b) eine Vorrichtung zum Verfahren der Lehre in der Raumrichtung X, die senkrecht zur Längsachse der Lehre (26) steht,
c) eine Vorrichtung zum Verfahren der Lehre (26) in einer Raumrichtung Z, die parallel zur Längsachse der Lehre (26) verläuft,
d) einen Sensor zur Erkennung des Anschlags oder der Annäherung der Lehre (26) an einen Gegenstand,
e) eine zumindest teilweise umrandete Aufnahmeposition (14) für die Lehre (26), in die die Lehre (26) durch Verfahren der Lehre (26) in Raumrichtung X und/oder Z zumindest teilweise einführbar ist,
f) eine bewegbare Baugruppe (27),
charakterisiert dadurch, dass die Aufnahmeposition (14) für die Lehre (26) auf der bewegbaren Baugruppe (27) angeordnet ist.

2. Vorrichtung (10) nach Anspruch 1, wobei die bewegbare Baugruppe (27) drehbar ist.

3. Vorrichtung (10) nach einem der vorhergehenden Ansprüche, wobei die Aufnahmeposition (14) für die Lehre (26) einen ersten Randabschnitt (17) und einen zweiten Randabschnitt (18) aufweist und wobei die Randabschnitte (17, 18) die Aufnahmeposition (14) für die Lehre (26) in Raumrichtung X derart begrenzen, dass die Aufnahmeposition (14) für die Lehre (26) in Raumrichtung X, die tangential zur drehbaren Baugruppe im Bereich der Aufnahmeposition (14) für die Lehre (26) verläuft, zwischen einer ersten gedachten Linie (19), die parallel zur Raumrichtung X verläuft und einer zweiten gedachten Linie (20), die parallel zur Raumrichtung X verläuft, streng monoton abnimmt.

4. Vorrichtung (10) nach einem der vorhergehenden Ansprüche, wobei die Aufnahmeposition (14) für die Lehre (26) die Form eines Dreiecks, bevorzugt die Form eines gleichschenkligen Dreiecks oder die Form eines Zweiecks, in der Form ähnlich oder gleich einem gleichschenkligen Dreieck mit einem gerundeten Abschnitt zwischen den Schenkeln oder die Form einer halben Kreisscheibe oder die Form einer viertel Kreisscheibe aufweist.

5. Vorrichtung (10) nach Anspruch 3, wobei der erste Randabschnitt (17) und der zweite Randabschnitt (18) der Aufnahmeposition (14) für die Lehre (26) gerade verlaufen und in V-Form zusammen laufen und wobei der erste Randabschnitt (17) und der zweite Randabschnitt (18) symmetrisch sind zur gerade verlängerten Verbindungslinie des Drehpunktes der drehbaren Baugruppe und eines Punktes (29), an dem der erste Randabschnitt (17) und der zweite Randabschnitt (18) zusammenlaufen.

6. Vorrichtung (10) nach einem der Ansprüche 1 und 2, wobei die Aufnahmeposition (14) für die Lehre (26) als Vertiefung in Form eines Zylinders, bevorzugt eines geraden Kreiszylinders ausgestaltet ist.

7. Vorrichtung (10) nach einem der vorhergehenden Ansprüche, wobei die Aufnahmeposition (14) für die Lehre (26) mindestens eine Stufe, bevorzugt mindestens zwei Stufen mit jeweils einer Begrenzungsfläche (21) in Raumrichtung Z aufweist.

8. Vorrichtung (10) nach einem der vorhergehenden Ansprüche, wobei die Lehre (26) als Zylinder, bevorzugt als gerader Kreiszylinder ausgestaltet ist oder wobei die Lehre (26) ein Greifer ist oder wobei die Lehre (26) eine Pipettiernadel (11) ist.

9. Analysegerät umfassend mindestens eine Vorrichtung (10) zur Positionsbestimmung einer automatisch verfahrbaren Lehre (26) nach einem der vorhergehenden Ansprüche.

10. Verfahren zur Positionsbestimmung einer automatisch verfahrbaren Lehre (26) umfassend die Verfahrensschritte:
a) Einführen der Lehre (26) in eine Aufnahmeposition (14), die auf einer bewegbaren Baugruppe (27) angeordnet ist, durch Verfahren der Lehre (26) in Raumrichtung Z, die parallel zur Längsachse der Lehre verläuft und/oder in Raumrichtung X, die parallel zur Bewegungsrichtung der bewegbaren Baugruppe (27) verläuft und/oder in Raumrichtung Y, die senkrecht zur Bewegungsrichtung der bewegbaren Baugruppe (27) verläuft;
b) Bewegen der bewegbaren Baugruppe (27) in positiver Richtung bis zur Annäherung oder zum Anschlag der Lehre (26) an einen ersten Randabschnitt (17) der Aufnahmeposition (14);
c) Bewegen der bewegbaren Baugruppe (27) in negativer Richtung bis zur Annäherung oder zum Anschlag der Lehre (26) an einen zweiten Randabschnitt (18) der Aufnahmeposition (14); und
d) Ermitteln des Abstands zwischen den Anschlagspunkten am ersten Randabschnitt (17) und zweiten Randabschnitt (18) der Aufnahmeposition (14).

11. Verfahren nach Anspruch 10, ferner umfassend die Verfahrensschritte:
e) Ermitteln der Position der Lehre (26) in Raumrichtung X durch Auswertung des Anschlagspunkts am ersten Randabschnitt (17) und/oder des Anschlagspunkts am zweiten Randabschnitt (18) der Aufnahmeposition (14);
f) Ermitteln der Position der Lehre (26) in Raumrichtung Y durch Zuordnung des ermittelten Abstands zwischen dem Anschlagspunkt am ersten Randabschnitt (17) und dem Anschlagspunkt am zweiten Randabschnitt (18) der Aufnahmeposition (14) zu einer Position in Raumrichtung Y.

12. Verfahren nach Anspruch 10, ferner umfassend die Verfahrensschritte:
g) Verfahren der Lehre (26) in Raumrichtung Y innerhalb der Aufnahmeposition (14);
h) Wiederholen der Schritte b), c), d);
i) Ermitteln der Position der Lehre (26) in Raumrichtung Y durch Zuordnen der ermittelten Abstände zwischen den Anschlagspunkten am ersten Randabschnitt (17) und den Anschlagspunkten am zweiten Randabschnitt (18) der Aufnahmeposition (14) einer Position in Raumrichtung Y.

13. Verfahren nach einem der Ansprüche 10 bis 12, wobei die bewegbare Baugruppe (27) drehbar ist und wobei die Raumrichtung X tangential zur drehbaren Baugruppe (27) verläuft und wobei die Raumrichtung Y radial zur drehbaren Baugruppe (27) verläuft.

14. Verfahren nach einem der Ansprüche 10 bis 13, wobei die Aufnahmeposition (14) für die Lehre (26) die Form eines Dreiecks, bevorzugt die Form eines gleichschenkligen Dreiecks oder die Form eines Zweiecks in der Form ähnlich oder gleich einem gleichschenkligen Dreieck mit einem gerundeten Abschnitt zwischen den Schenkeln oder die Form einer halben Kreisscheibe oder die Form einer viertel Kreisscheibe aufweist.

15. Verfahren nach einem der Ansprüche 10 bis 13, wobei der erste Randabschnitt (17) und der zweite Randabschnitt (18) der Aufnahmeposition (14) für die Lehre (26) gerade verlaufen und in V-Form zusammen laufen und wobei der erste Randabschnitt (17) und der zweite Randabschnitt (18) symmetrisch sind zur gerade verlängerten Verbindungslinie des Drehpunktes der drehbaren Baugruppe und des Punktes (29), an dem der erste Randabschnitt (17) und der zweite Randabschnitt (18) zusammenlaufen.

16. Verfahren nach einem der Ansprüche 10 bis 14, wobei die Aufnahmeposition (14) für die Lehre (26) als Vertiefung in Form eines Zylinders, bevorzugt eines geraden Kreiszylinders ausgestaltet ist.

17. Verfahren nach einem der Ansprüche 10 bis 16, wobei die Aufnahmeposition (14) für die Lehre (26) mindestens eine Stufe, bevorzugt mindestens zwei Stufen mit jeweils einer Begrenzungsfläche (21) in Raumrichtung Z aufweist.

18. Verfahren nach einem der Ansprüche 10 bis 17, wobei die Lehre (26) als Zylinder, bevorzugt als gerader Kreiszylinder ausgestaltet ist oder wobei die Lehre (26) ein Greifer ist oder wobei die Lehre (26) eine Pipettiernadel (11) ist.

## Claims

1. Device (10) for determining the position of an automatically displaceable gauge (26), said device comprising
a) the gauge (26),
b) a device for displacing the gauge in the spatial X-direction, which is perpendicular to the longitudinal axis of the gauge (26),
c) a device for displacing the gauge (26) in a spatial Z-direction, which extends parallel to the longitudinal axis of the gauge (26),
d) a sensor for identifying the abutment of the gauge (26) on, or the approach thereof to, an article,
e) an at least partly bordered receptacle position (14) for the gauge (26), into which the gauge (26) is at least partly insertable by displacing the gauge (26) in the spatial X-and/or Z-direction,
f) a movable assembly (27),
**characterized in that** the receptacle position (14) for the gauge (26) is arranged on the movable assembly (27).

2. Device (10) according to Claim 1, wherein the movable assembly (27) is rotatable.

3. Device (10) according to one of the preceding claims, wherein the receptacle position (14) for the gauge (26) has a first edge section (17) and a second edge section (18) and wherein the edge sections (17, 18) delimit the receptacle position (14) for the gauge (26) in the spatial X-direction in such a way that the receptacle position (14) for the gauge (26) decreases strictly monotonically between a first imaginary line (19), which extends parallel to the spatial X-direction, and a second imaginary line (20), which extends parallel to the spatial X-direction, in the spatial X-direction, which extends tangentially to the rotatable assembly in the region of the receptacle position (14) for the gauge (26).

4. Device (10) according to one of the preceding claims, wherein the receptacle position (14) for the gauge (26) has the shape of a triangle, preferably the shape of an isosceles triangle, or the shape of a digon, similar or equal in shape to an isosceles triangle with a rounded section between the sides, or the shape of a half circular disk or the shape of a quarter circular disk.

5. Device (10) according to Claim 3, wherein the first edge section (17) and the second edge section (18) of the receptacle position (14) for the gauge (26) extend in a straight line and converge in a V-shape and wherein the first edge section (17) and the second edge section (18) are symmetrical with respect to the straight extended connection line between the point of rotation of the rotatable assembly and a point (29) at which the first edge section (17) and the second edge section (18) converge.

6. Device (10) according to either of Claims 1 and 2, wherein the receptacle position (14) for the gauge (26) is configured as a depression in the form of a cylinder, preferably a right circular cylinder.

7. Device (10) according to one of the preceding claims, wherein the receptacle position (14) for the gauge (26) has at least one step, preferably at least two steps with respectively a boundary face (21) in the spatial Z-direction.

8. Device (10) according to one of the preceding claims, wherein the gauge (26) is embodied as a cylinder, preferably as a right circular cylinder, or wherein the gauge (26) is a gripper or wherein the gauge (26) is a pipetting needle (11).

9. Analysis instrument comprising at least one device (10) for determining the position of an automatically displaceable gauge (26) according to one of the preceding claims.

10. Method for determining the position of an automatically displaceable gauge (26), comprising the following method steps:
a) introducing the gauge (26) into a receptacle position (14), which is arranged on a movable assembly (27), by displacing the gauge (26) in the spatial Z-direction, which extends parallel to the longitudinal axis of the gauge, and/or in the spatial X-direction, which extends parallel to the movement direction of the movable assembly (27), and/or in the spatial Y-direction, which extends perpendicular to the movement direction of the movable assembly (27);
b) moving the movable assembly (27) in the positive direction until the gauge (26) approaches, or abuts on, a first edge section (17) of the receptacle position (14);
c) moving the movable assembly (27) in the negative direction until the gauge (26) approaches, or abuts on, a second edge section (18) of the receptacle position (14); and
d) establishing the distance between the points of abutment on the first edge section (17) and the second edge section (18) of the receptacle position (14).

11. Method according to Claim 10, furthermore comprising the following method steps:
e) establishing the position of the gauge (26) in the spatial X-direction by evaluating the abutment point on the first edge section (17) and/or the abutment point on the second edge section (18) of the receptacle position (14);
f) establishing the position of the gauge (26) in the spatial Y-direction by assigning the established distance between the abutment point on the first edge section (17) and the abutment point on the second edge section (18) of the receptacle position (14) to a position in the spatial Y-direction.

12. Method according to Claim 10, furthermore comprising the following method steps:
g) displacing the gauge (26) in the spatial Y-direction within the receptacle position (14);
h) repeating steps b), c), d);
i) establishing the position of the gauge (26) in the spatial Y-direction by assigning the established distances between the abutment points on the first edge section (17) and the abutment points on the second edge section (18) of the receptacle position (14) to a position in the spatial Y-direction.

13. Method according to one of Claims 10 to 12, wherein the movable assembly (27) is rotatable and wherein the spatial X-direction extends tangentially to the rotatable assembly (27) and wherein the spatial Y-direction extends radially to the rotatable assembly (27).

14. Method according to one of Claims 10 to 13, wherein the receptacle position (14) for the gauge (26) has the shape of a triangle, preferably the shape of an isosceles triangle, or the shape of a digon, similar or equal in shape to an isosceles triangle with a rounded section between the sides, or the shape of a half circular disk or the shape of a quarter circular disk.

15. Method according to one of Claims 10 to 13, wherein the first edge section (17) and the second edge section (18) of the receptacle position (14) for the gauge (26) extend in a straight line and converge in a V-shape and wherein the first edge section (17) and the second edge section (18) are symmetrical with respect to the straight extended connection line between the point of rotation of the rotatable assembly and the point (29) at which the first edge section (17) and the second edge section (18) converge.

16. Method according to one of Claims 10 to 14, wherein the receptacle position (14) for the gauge (26) is configured as a depression in the form of a cylinder, preferably a right circular cylinder.

17. Method according to one of Claims 10 to 16, wherein the receptacle position (14) for the gauge (26) has at least one step, preferably at least two steps with respectively a boundary face (21) in the spatial Z-direction.

18. Method according to one of Claims 10 to 17, wherein the gauge (26) is embodied as a cylinder, preferably as a right circular cylinder, or wherein the gauge (26) is a gripper or wherein the gauge (26) is a pipetting needle (11).

## Revendications

1. Dispositif (10) de détermination de la position d'une jauge (26) pouvant se déplacer automatiquement, ledit dispositif comportant
a) la jauge (26),
b) un dispositif de déplacement de la jauge dans la direction X de l'espace, qui est perpendiculaire à l'axe longitudinal de la jauge (26),
c) un dispositif de déplacement de la jauge (26) dans une direction Z de l'espace, qui est parallèle à l'axe longitudinal de la jauge (26),
d) un capteur de détection de la venue en butée de la jauge (26) sur un objet ou du rapprochement de la jauge (26) de l'objet,
e) une position (14) de réception, bordée au moins en partie, pour la jauge (26), dans laquelle la jauge (26) peut être introduite au moins en partie, par déplacement de la jauge dans la direction X et/ou Z de l'espace,
f) un module (27) mobile,
**caractérisé par le fait que** la position (14) de réception pour la jauge (26) est disposée sur le module (27) mobile.

2. Dispositif (10) suivant la revendication 1, dans lequel le module (27) mobile peut tourner.

3. Dispositif (10) suivant l'une des revendications précédentes, dans lequel la position (14) de réception pour la jauge (26) a une première partie (17) de bord et une deuxième partie (18) de bord et dans lequel les parties (17, 18) de bord délimitent la position (14) de réception pour la jauge (26) dans la direction X de l'espace de manière à ce que la position (14) de réception pour la jauge (26) diminue d'une manière strictement monotone dans la direction X de l'espace, qui s'étend tangentiellement au module tournant dans la région de la position (14) de réception pour la jauge (26) entre une première ligne (19) imaginaire, qui est parallèle à la direction X de l'espace, à une deuxième ligne (20) imaginaire, qui est parallèle à la direction X de l'espace.

4. Dispositif (10) suivant l'une des revendications précédentes, dans lequel la position (14) de réception pour la jauge (26) a la forme d'un triangle, de préférence la forme d'un triangle isocèle ou la forme d'un biangle analogue ou identique dans la forme à un triangle isocèle ayant une partie arrondie entre les branches ou a la forme d'un demi-disque circulaire ou a la forme d'un quart de disque circulaire.

5. Dispositif (10) suivant la revendication 3, dans lequel la première partie (17) de bord et la deuxième partie (18) de bord de la position (14) de réception pour la jauge (26) s'étendent en ligne droite et se rejoignent en forme de V et dans lequel la première partie (17) de bord et la deuxième partie (18) de bord sont symétriques par rapport à la ligne de liaison prolongée rectilignement du centre de rotation du module tournant et d'un point (29) où la première partie (17) de bord et la deuxième partie (18) de bord se rejoignent.

6. Dispositif (10) suivant l'une des revendications 1 et 2, dans lequel la position (14) de réception pour la jauge (26) est conformée sous la forme d'une cavité sous la forme d'un cylindre, de préférence d'un cylindre droit de section transversale circulaire.

7. Dispositif (10) suivant l'une des revendications précédentes, dans lequel la position (14) de réception pour la jauge (26) a au moins un palier, de préférence au moins deux paliers, ayant respectivement une surface (21) de démarcation dans la direction Z de l'espace.

8. Dispositif (10) suivant l'une des revendications précédentes, dans lequel la jauge (26) est conformée sous la forme d'un cylindre, de préférence sous la forme d'un cylindre droit de section transversale circulaire ou dans lequel la jauge (26) est un préhenseur ou dans lequel la jauge (26) est une aiguille (11) de pipetage.

9. Appareil d'analyse comprenant au moins un dispositif (10) de détermination de la position d'une jauge (26) pouvant se déplacer automatiquement suivant l'une des revendications précédentes.

10. Procédé de détermination de la position d'une jauge (26) pouvant se déplacer automatiquement comprenant les stades de procédé :
a) on introduit la jauge dans une position (14) de réception, qui est disposée sur un module (27) mobile, en déplaçant la jauge dans la direction Z de l'espace, qui est parallèle à l'axe longitudinal de la jauge et/ou dans une direction X de l'espace, qui est parallèle à la direction de déplacement du module (27) mobile et/ou dans la direction Y de l'espace, qui est perpendiculaire à la direction de déplacement du module (27) mobile ;
b) on déplace le module (27) mobile dans la direction positive jusqu'à ce qu'il se rapproche de la jauge (26) ou jusqu'à ce qu'il vienne en butée sur la jauge (26) en une première partie (17) de bord de la position (14) de réception ;
c) on déplace le module (27) module dans la direction négative jusqu'à ce qu'il se rapproche de la jauge (26) ou qu'il vienne en butée sur la jauge (26) en une deuxième partie (18) de bord de la position (14) de réception ;
d) on détermine la distance entre les points de butée sur la première partie (17) de bord et la deuxième partie (18) de bord de la position (14) de réception.

11. Procédé suivant la revendication 10, comprenant en outre les stades de procédé :
e) on détermine la position de la jauge (26) dans la direction X de l'espace en exploitant le point de butée sur la première partie (17) de bord et/ou le point de butée sur la deuxième partie (18) de bord de la position (14) de réception ;
f) on détermine la position de la jauge (26) dans la direction Y de l'espace en associant la distance déterminée entre le point de butée sur la première partie (17) de bord et le point de butée sur la deuxième partie (18) de bord de la position (14) de réception à une position dans la direction Y de l'espace.

12. Procédé suivant la revendication 10, comprenant en outre les stades de procédé :
g) on déplace la jauge (26) dans la direction Y de l'espace à l'intérieur de la position (14) de réception ;
h) on répète les stades b), c), d) ;
i) on détermine la position de la jauge (26) dans la direction Y de l'espace en associant les distances déterminées entre les points de butée sur la première partie (17) de bord et les points de butée sur la deuxième partie (18) de bord de la position (14) de réception à une position dans la direction Y de l'espace.

13. Procédé suivant l'une des revendications 10 à 12, dans lequel le module (27) mobile peut tourner et dans lequel la direction X de l'espace est tangente au module (27) tournant et dans lequel la direction Y de l'espace est radiale au module (27) tournant.

14. Procédé suivant l'une des revendications 10 à 13, dans lequel la position (14) de réception pour la jauge (26) a la forme d'un triangle de préférence la forme d'un triangle isocèle ou la forme d'un biangle analogue ou identique dans la forme à un triangle isocèle ayant une partie arrondie entre les branches ou à la forme d'un demi-disque circulaire ou a la forme d'un quart de disque circulaire.

15. Procédé suivant l'une des revendications 10 à 13, dans lequel la première partie (17) de bord et la deuxième partie (18) de bord de la position (14) de réception pour la jauge (26) s'étendent en ligne droite et se rejoignent en forme de V et dans lequel la première partie (17) de bord et la deuxième partie (18) de bord sont symétriques par rapport à la ligne de liaison prolongée rectilignement du centre de rotation du module tournant et d'un point (29) où la première partie (17) de bord et la deuxième partie (18) de bord se rejoignent.

16. Procédé suivant l'une des revendications 10 à 14, dans lequel la position (14) de réception pour la jauge (26) est conformée sous la forme d'une cavité sous la forme d'un cylindre, de préférence d'un cylindre droit de section transversale circulaire.

17. Procédé suivant l'une des revendications 10 à 16, dans lequel la position (14) de réception pour la jauge (26) a au moins un palier, de préférence au moins deux paliers, ayant respectivement une surface (21) de démarcation dans la direction Z de l'espace.

18. Procédé suivant l'une des revendications 10 à 17, dans lequel la jauge (26) est conformée sous la forme d'un cylindre, de préférence sous la forme d'un cylindre droit de section transversale circulaire ou dans lequel la jauge (26) est un préhenseur ou dans lequel la jauge (26) est une aiguille (11) de pipetage.
